# EUROPÄISCHE PATENTSCHRIFT

(11) **EP 0 429 013 B1**
(45) Veröffentlichungstag und Bekanntmachung des Hinweises auf die Patenterteilung: **26.01.1994**
(21) Anmeldenummer: 90121921.2
(22) Anmeldetag: 16.11.1990
(51) Int. Cl.: B24B 27/08, B24B 55/10

(54) **Winkeltrennschleifer mit Staubabsaugung**
Angle drive grinder with dust extraction
Meuleuse d'angle avec aspiration des poussières

(30) Priorität: 18.11.1989 DE 8913640 U
(43) Veröffentlichungstag der Anmeldung: 29.05.1991
(73) Patentinhaber: B S B BIEDRON GmbH, D-44879 Bochum (DE)
(72) Erfinder: Biedron, Ralf, W-4630 Bochum 5 (DE)
(74) Vertreter: Finkener und Ernesti Patentanwälte

(56) Entgegenhaltungen:
- DE-A- 3 037 573
- DE-A- 3 038 489
- DE-A- 3 151 276
- DE-A- 3 444 116
- DE-C- 498 645
- DE-U- 8 714 483
- DE-U- 8 913 640

## Beschreibung

Die Erfindung betrifft einen Winkeltrennschleifer vorzugsweise Einhand-Trennschleifer, bestehend aus einem in einem länglichen Gehäuse angecrdneten Motor, an dessen vorderem Ende eine Trennscheibe angebracht ist, deren Welle rechtwinklig zur Längsachse des Motorgehäuses verläuft, wobei die Trennscheibe teilweise von einer Schutzhaube umschlossen und mit einem Stutzen versehen ist, an den der Schlauch einer Absaugeinrichtung anschließbar ist und die Schutzhaube auf der dem Motorgehäuse zugewandten Seitenfläche mit dem Absaugstutzen versehen ist, dessen Austrittsende sich in Richtung des hinteren Endes des Motorgehäuses erstreckt. Ein derartiger Winkeltrennschleifer ist aus der DE-A-3 038 489 bekannt.

Trennschleifer, bei denen die Schutzhaube gleichzeitig eine Absaughaube für den anfallenden Staub darstellt, sind bekannt. Üblicherweise, z. B. beim Schreiden von Dachpfannen werden die Trennschleifer als Einhandschleifer verwendet, wcbei das längliche zylindrische Motorgehäuse als Griffstück dient. Es ist auch bekannt, derartige Trennschleifer für bestimmte Anwendungsfälle, z. B. zum Schneiden von Fliesen mit einem zweiten Handgriff zu versehen, der abnehmbar an dem Gerät angebracht werden kann. Ferner gehört es zum Stand der Technik, solche Maschinen mit einer Staubabsaugung zu versehen. Zu diesem Zweck wird die Schutzhaube mit einem Absaugstutzen versehen, an den ein biegsamer Schlauch anschließbar ist, der mit einer Absaugeinrichtung, z. B. einem Staubsauger verbunden ist. Ein Nachteil der bekannten Absaugeinrichtungen besteht darin, daß die Anbringung des Stutzens und des Absaugschlauches am vorderen Ende der Schutzhaube erfolgt, so daß die freie Sicht auf das Schneidgut behindert wird. Nachteilig ist auch, daß der nach vorn und seitlich zu der Absaugeinrichtung weggeführte Absaugschlauch das Hantieren mit der Gerät erschwert, weil sich nicht vermeiden läßt, daß der Schlauch beim Arbeiten, insbesondere auf Dächern und dergleichen im Wege ist.

Bei dem aus der DE-A-3 038 489 bekannten Winkelschleifer ist der Absaugkanal, der mit dem Inneren der Abdeckhaube in Verbindung steht, in das Motorgehäuse integriert, dessen Umfang entsprechend vergrößert ist. Es läßt sich nicht vermeiden, daß dadurch die Handlichkeit des Gerätes beeinträchtigt wird, was sich insbesondere bei Einhand-Geräten nachteilig auswirkt, bei denen das Gehäuse als Griffstück dient.

Die Aufgabe, die der Erfindung zugrunde liegt besteht darin, eine Staubabsaugung zu ermöglichen, die einerseits eine freie Sicht auf die Arbeitsstelle zuläßt und andererseits ein sicheres Greifen und Hantieren mit dem Gerät gewährleistet.

Ausgehend von einem Winkeltrennschleifer der vorstehend beschriebenen Art besteht die Erfindung darin, daß der Austrittsstutzen als oberhalb des Motorgehäuses und im Abstand von diesem verlaufender Handgriff ausgebildet ist, der am hinteren Ende des Motorgehäuses mittels einer Halterung fixiert ist.

Eine bevorzugte Ausführungsform der Erfindung sieht vor, daß das Austrittsende des Handgriffes mit einer Kupplung zum Anschluß eines zu einer Absaugeinrichtung führenden Schlauches versehen ist.

Diese Ausführungsform hat den Vorteil, daß die Absaugeinrichtung bis zum Ende der Trennmaschine ein starrer Bestandteil des Gerätes ist und der biegsame Schlauch erst am hinteren Ende des Gerätes angekuppelt wird. Abgesehen davon, daß dadurch keine Behinderung durch den Schlauch im Bereich der Schnittstelle erfolgt, kann das Gerät als Einhandschleifer benutzt werden. In diesem Fall wird das Gerät mit der meist rechten Arbeitshand an dem sehr handlichen Griffteil erfaßt und nicht mehr wie bisher an dem oft unhandlichen verhältnismäßig dicken Motorgehäuse. Der Trennschleifer kann auch mit beiden Händen gehalten werden, nämlich einerseits an dem Griff und andererseits unterstützend an dem Motorgehäuse. Dies trägt erheblich zur Sicherheit und zur Vermeidung von Unfällen bei.

Erfindungsgemäß kann der Stutzen auch zweiteilig ausgebildet werden und aus einem zylindrischen an dem Motorgehäuse angebrachten Teil und einem dicht daran angeschlossenen rechtwinklig abgebogenen Teil bestehen. Die Schutzhaube besteht zweckmäßigerweise aus zwei lösbar miteinander verbundenen in ihrer mittleren Längsebene gegeneinander anliegenden Hälften. Die Erfindung sieht ferner vor, daß die Innenflächen der Schutzhaube mit in ihren Innenraum vorspringenden Leitrippen versehen sind, die sich von dem Ende, an dem die sich drehende Trennscheibe in die Schutzhaube eintritt, zu dem Austrittsstutzen erstrecken.

Auf der Zeichnung ist ein Ausführungsbeispiel der Erfindung dargestellt, es zeigen
- Fig. 1: eine Seitenansicht eines Winkeltrennschleifers und
- Fig. 2: eine Draufsicht.

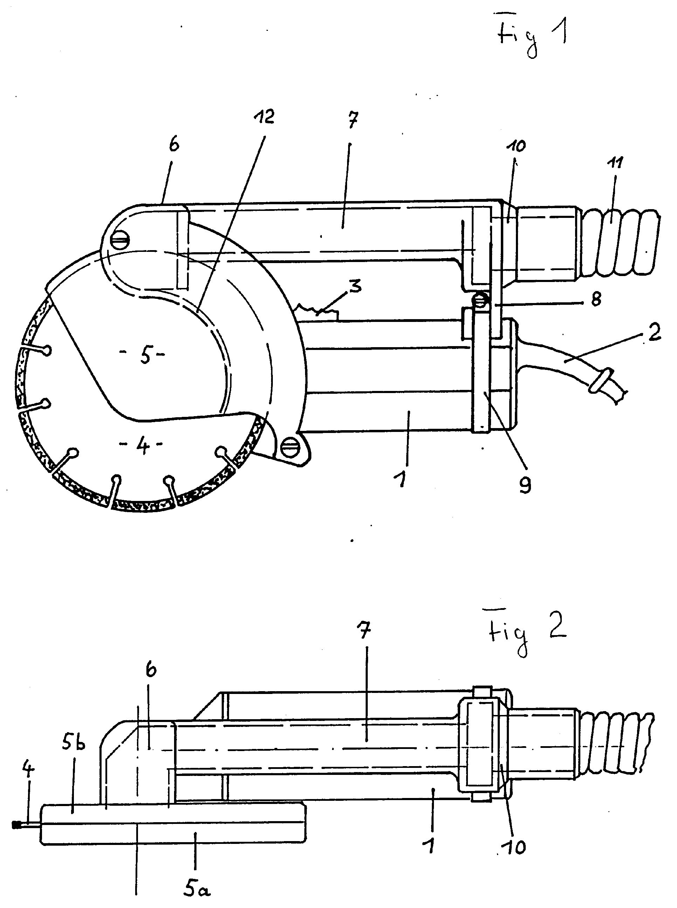

Mit (1) ist das längliche Motorgehäuse des Trennschleifers bezeichnet; die Stromzufuhr erfolgt über ein Kabel (2) am hinteren Ende des Gehäuses. Der Ein-Ausschalter (3) befindet sich in der normalen Arbeitsstellung, in der die Trennscheibe (4) senkrecht zu dem zu bearbeitenden Werkstück steht, auf der Oberseite des Motorgehäuses. Die Schutz- und Absaughaube (5) überdeckt die Trennscheibe, wie sich aus Fig. 1 ergibt, teilweise. Sie besteht aus zwei Hälften (5a und 5b), die z. B. durch Schrauben lösbar miteinander verbunden sind. Üblicherweise ist die Schutzhaube abnehmbar mit einer Schelle an dem Aufnahmeflansch des Motors angebracht.

Erfindungsgemäß ist an der Schutzhaube ein Absaugstutzen (6), vorzugsweise aus Aluminiumguß angebracht, der auf der dem Motorgehäuse zugewandten Seite der Haube in der normalen Arbeitsstellung oberhalb des Motorgehäuses oder um einen senkrechten Abstand hoher als dieses sitzt. Das Austrittsende des Stutzens verläuft dabei in Richtung des hinteren Endes des Motorgehäuses. Bei der auf der Zeichnung dargestellten bevorzugten Ausführungsform der Erfindung geht das Austrittsende des rechtwinklig abgebogenen Stutzens (6) in einen Handgriff (7) über, d. h. der Autrittsstutzen ist als oberhalb und im Abstand von dem Motorgehäuse verlaufender Handgriff ausgebildet, der mit einer Halterung (8) versehen ist, die sich am hinteren Ende des Motorgehäuses an diesem abstützt und mit einer Schelle (9) daran befestigt ist. Bei der auf Fig. 1 dargestellten Ausführungsform verläuft der als Handgriff (7) ausgebildete Abschnitt des Absaugstutzens parallel zu dem Motorgehäuse in einem Abstand, der der Höhe der Anbringung des Stutzens über dem Gehäuse entspricht. Mit (10) ist eine übliche Kupplung zum Anschluß eines mit einer Absaugeinrichtung, z. B. einem Staubsauger verbundenen Schlauches (11) bezeichnet.

In Fig. 1 sind die Leitrippen (12), die an der Innenwandung der Absaughaube angebracht sind und sich in den Innenraum erstrecken, mit gestrichelten Linien angedeutet. Sie verlaufen von dem Ende, an dem die sich drehende Trennscheibe in die Schutzhaube eintritt, kurvenförmig zum Absaugstutzen. Die Höhe der Leitrippen, die an beiden Hälften (5a und 5b) der Haube angebracht sind, ist so gewählt, daß zwischen ihren sich gegenüberliegenden Endflächen ein ausreichendes Spiel für den Durchtritt der Trennscheibe verbleibt.

Der Absaugstutzen kann auch zweiteilig ausgebildet werden und aus einem zylindrischen, an der Absaughaube angebrachten Teil und einem sich daran anschließenden rechtwinklig abgebogenen Abschnitt bestehen. Es besteht die Möglichkeit, den Handgriff als Teil des Stutzens, z. B. aus einem Stück mit dem rechtwinklig abgebogenen Teil des Stutzens auszubilden oder ihn völlig getrennt von dem Stutzen zu fertigen und bei der Montage dicht mit dem Stutzen zu verbinden. Wenn der Trennschleifer als reiner Einhandschleifer benutzt werden soll und nur am Motorgehäuse gegriffen wird, so daß ein zweiter Handgriff nicht erforderlich ist, besteht selbstverständlich auch die Möglichkeit, die Kupplung für den Schlauch an einem mehr oder weniger langen Endabschnitt des sich parallel zum Motorgehäuse erstreckenden Stutzens anzubringen.

In allen Fällen ist sichergestellt, daß der Absaugschlauch parallel zum Motorgehäuse nach hinten weggeführt wird und keine Behinderung durch den Schlauch in dem Arbeitsbereich vor und neben der Trennscheibe auftritt.

## Patentansprüche

1. Winkeltrennschleifer, vorzugsweise Einhand-Trennschleifer, bestehend aus einem in einem länglichen Gehäuse (1) angeordneten Motor, an dessen vorderem Ende eine Trennscheibe (4) angebracht ist, deren Welle rechtwinklig zur Längsachse des Motorgehäuses verläuft, wobei die Trennscheibe teilweise von einer Schutzhaube (5) umschlossen und mit einem Stutzen (6) versehen ist, an den der Schlauch einer Absaugeinrichtung anschließbar ist und die Schutzhaube (5) auf der dem Motorgehäuse (1) zugewandten Seitenfläche mit dem Absaugstutzen (6) versehen ist, dessen Austrittsende sich in Richtung des hinteren Endes des Motorgehäuses erstreckt, dadurch gekennzeichnet, daß der Austrittsstutzen (6) als oberhalb des Motorgehäuses und im Abstand von diesem verlaufender Handgriff (7) ausgebildet ist, der am hinteren Ende des Motorgehäuses mittels einer Halterung (8) fixiert ist.

2. Winkeltrennschleifer nach Anspruch 1, dadurch gekennzeichnet, daß das Austrittsende des Handgriffes (7) mit einer Kupplung (10) zum Anschluß eines zu einer Absaugeinrichtung führenden Schlauches (11) versehen ist.

3. Winkeltrennschleifer nach den Ansprüchen 1 und 2, dadurch gekennzeichnet, daß der Stutzen (6) zweiteilig ausgebildet ist und aus einem zylindrischen an dem Motorgehäuse angebrachten Teil und einem dicht daran angeschlossenen rechtwinklig abgebogenen Teil besteht.

4. Winkeltrennschleifer nach den Ansprüchen 1 bis 3, dadurch gekennzeichnet, daß die Schutzhaube (5) aus zwei lösbar miteinander verbundenen in ihrer mittleren Längsebene gegeneinander anliegenden Hälften (5a, 5b) besteht.

5. Winkeltrennschleifer nach den Ansprüchen 1 bis 4, dadurch gekennzeichnet, daß die Innenflächen der Schutzhaube (6) mit in ihren Innenraum vorspringenden Leitrippen (12) versehen sind, die sich von dem Ende, an dem die sich drehende Trennscheibe (4) in die Schutzhaube (5) eintritt, zu dem Austrittsstutzen (6) erstrecken.

## Claims

1. Angular abrasive cutter, preferably a single-handed abrasive cutter, consisting of a motor which is arranged in an oblong housing (1), and at whose front end there is fixed an abrasive cutter wheel (4) whose shaft runs at right angles to the longitudinal axis of the motor housing, wherein the cutter wheel is partly enclosed by a protective hood (5) and is provided with a socket (6), to which the hose of a suction arrangement can be connected, and the protective hood (5), on the lateral surface facing the motor housing (1), is provided with the suction socket (6), whose outlet end extends in the direction of the rear end of the motor housing, characterised in that the outlet socket (6) is designed as a handle (7), which runs above the motor housing and at a spacing from the latter, and is fixed to the rear end of the motor housing by means of a mount (8).

2. Angular abrasive cutter as claimed in Claim 1, characterised in that the outlet end of the handle (7) is provided with a coupling (10) for the connection of a hose (11) which leads to a suction arrangement.

3. Angular abrasive cutter as claimed in Claims 1 and 2, characterised in that the socket (6) is bipartite in design and is composed of a cylindrical part which is fixed to the motor housing and a part bent at right angles which is tightly connected thereto.

4. Angular abrasive cutter as claimed in Claims 1 to 3, characterised in that the protective hood (5) is composed of two halves (5a and 5b), which are detachably connected together and butt against each other in their central longitudinal plane.

5. Angular abrasive cutter as claimed in Claims 1 to 4, characterised in that the inner surfaces of the protective hood (6) are provided with guide ribs (12) which project into their inner space, and which extend from the end at which the rotating cutter wheel (4) enters the protective hood (5), to the outlet socket (6).

## Revendications

1. Meuleuse d'angle, de préférence tronçonneuse à meule tenue par une seule main, constituée par un moteur disposé dans un boîtier longitudinal (1), à l'extrémité avant duquel est montée une meule de tronçonnage (4) dont l'arbre est perpendiculaire à l'axe longitudinal du boîtier du moteur, la meule de tronçonnage étant partiellement entourée par un capot de protection (5) et étant munie d'une tubulure (6) à laquelle peut être raccordé le tuyau flexible d'un dispositif d'aspiration, et le capot de protection (5) étant muni sur la surface latérale qui est tournée vers le boîtier (1) du moteur de la tubulure d'aspiration (6) dont l'extrémité de sortie s'étend en direction de l'extrémité arrière du boîtier du moteur, caractérisée en ce que la tubulure de sortie (6) est constituée sous forme d'une poignée (7) disposée au-dessus du boîtier du moteur en s'étendant à distance de celui-ci, et est fixée à l'extrémité arrière du boîtier du moteur au moyen d'une monture (8).

2. Meuleuse d'angle selon la revendication 1, caractérisée en ce que l'extrémité de sortie de la poignée (7) est munie d'un accouplement (10) pour le raccord d'un tuyau flexible (11) allant à un dispositif d'aspiration.

3. Meuleuse d'angle selon les revendications 1 et 2, caractérisée en ce que le tuyau (6) est constitué en deux parties et est formé par une partie cylindrique montée sur le boîtier du moteur et par une partie coudée à angle droit qui s'y raccorde.

4. Meuleuse d'angle selon les revendications 1 à 3, caractérisée en ce que le capot de protection (5) est constitué par deux moitiés (5a, 5b) reliées l'une à l'autre de façon amovible et s'appliquant l'une contre l'autre dans leur plan longitudinal central.

5. Meuleuse d'angle selon l'une quelconque des revendications 1 à 4, caractérisée en ce que les surfaces internes du capot de protection (5) sont munies de nervures de guidage (12) faisant saillie à l'intérieur, qui s'étendent depuis l'extrémité où la meule de tronçonnage rotative (4) pénètre dans le capot de protection (5) jusqu'à la tubulure de sortie (6).
